# EUROPEAN PATENT APPLICATION

(11) **EP 4 195 073 A1**
(43) Date of publication of application: **14.06.2023**
(21) Application number: 21855484.8
(22) Date of filing: 09.08.2021
(51) Int. Cl.: G06F 16/9535, G06F 16/951, G06F 16/33

(54) **CONTENT RECOMMENDATION METHOD, ELECTRONIC DEVICE AND SERVER**

(30) Priority: 11.08.2020 CN 202010799664
(71) Applicant: Petal Cloud Technology Co., Ltd., Dongguan, Guangdong 523799 (CN)
(72) Inventor: CHE, Yuan, Shenzhen, Guangdong 518129 (CN)
(74) Representative: Pfenning, Meinig & Partner mbB
(86) International application number: PCT/CN2021/111524
(87) International publication number: WO 2022/033432

(57) **Abstract**

A content recommendation method, an electronic device (51), and a server (52) are provided. The method includes: receiving a deep reading request sent by the electronic device (51), where the deep reading request is sent when the electronic device (51) receives a deep reading instruction operation of a user (1501); obtaining, based on the deep reading request, a deep reading keyword list of content currently browsed by the user (1502); obtaining a deep reading content list based on the deep reading keyword list (1503); mapping content in the deep reading content list to an entry of a preset deep reading display style, to generate deep reading information (1504); and sending the deep reading information to the electronic device (51) (1505). This can reduce an invalid browsing operation of the user, improve reading efficiency of the user, and improve user experience.

## Description

### TECHNICAL FIELD

This application relates to the field of intelligent terminal technologies, and in particular, to a content recommendation method, an electronic device, and a server.

### BACKGROUND

When a user reads a piece of content in a reading-related application (App, application) of an electronic device, for example, a browser or a news app, the application displays, on a content details page, some links of other content related to the content to the user, to attract the user to continue reading the content in the application.

However, although there is a correlation between content corresponding to the link of other content displayed by the application to the user and the content read by the user, the correlation mainly lies in content similarity, and a measurement standard of the content similarity is quite broad. If the user wants to know more content related to the content currently browsed, the user can only open a content link one by one based on a title of the content link, and access a content details page, to filter content that interests the user. During the whole process, the user performs a plurality of invalid browsing operations and obtains little valid information. As a result, reading efficiency is low, and user experience is poor.

### SUMMARY

Embodiments of this application provide a content recommendation method, an electronic device, and a server, to reduce an invalid browsing operation of a user, improve reading efficiency of the user, and improve user experience.

According to a first aspect, this application provides a content recommendation method. The method is applied to a server, and includes:
receiving a deep reading request sent by an electronic device, where the deep reading request is sent when the electronic device receives a deep reading instruction operation of a user;
obtaining, based on the deep reading request, a deep reading keyword list of content currently browsed by the user;

obtaining a deep reading content list based on the deep reading keyword list;
mapping content in the deep reading content list to an entry of a preset deep reading display style, to generate deep reading information; and
sending the deep reading information to the electronic device.

According to the method, the deep reading content list is obtained based on the deep reading keyword list, the content in the deep reading content list is mapped to the entry of the preset deep reading display style, to generate deep reading information, so that content recommended to the user is more systematic, and the user can find content of interest more easily. Therefore, this can reduce an invalid browsing operation of the user, improve reading efficiency of the user, and improve user experienced.

In a possible implementation, the obtaining a deep reading content list based on the deep reading keyword list includes:
obtaining a first knowledge graph from a preset original knowledge graph based on the deep reading keyword list;
obtaining an initial content list from a content library based on the first knowledge graph; and
obtaining a knowledge profile of the user, and filtering the initial content list based on the knowledge profile, to obtain the deep reading content list.

In the method, the obtained content list is filtered based on the knowledge profile of the user, so that content recommended to the user is closer to the user's knowledge level, cognitive ability, and the like, and a probability that the user finds content of interest is improved. Therefore, this can further reduce an invalid browsing operation of the user, improve reading efficiency of the user, and improve user experience.

In a possible implementation, obtaining a first knowledge graph of the content currently browsed by the user from a preset original knowledge graph based on the deep reading keyword list includes:
finding, from the original knowledge graph based on the deep reading keyword list, a graph tab corresponding to a deep reading keyword in the list; and
extracting the first knowledge graph from the original knowledge graph based on the found graph tab, where the first knowledge graph is a partial knowledge graph that is in the original knowledge graph and that includes the found graph tab.

In a possible implementation, the obtaining an initial content list from a content library based on the first knowledge graph includes:
obtaining, from the content library based on classification information included in the first knowledge graph, content under the classification information, to obtain a first content list;
obtaining, from the first content list based on the graph tab included in the first knowledge graph, content whose content tab hits at least one graph tab, to obtain a second content list; and
determining the initial content list based on the second content list.

In a possible implementation, the filtering the initial content list based on the knowledge profile, to obtain the deep reading content list includes:
obtaining a parameter value of a first knowledge parameter of the user based on the knowledge profile;
calculating a first topic depth value based on the parameter value of the first knowledge parameter of the user; and
selecting, from the initial content list, content whose topic depth value matches the first topic depth value, to obtain the deep reading content list.

In a possible implementation, before the mapping content in the deep reading content list to an entry of a preset deep reading display style, the method further includes:
obtaining a parameter value of first classification information of the content currently browsed by the user, and obtaining a deep reading display style corresponding to the parameter value of the first classification information.

In a possible implementation, the deep reading request carries a content identifier of the content currently browsed by the user; and the obtaining, based on the deep reading request, a deep reading keyword list of content currently browsed by the user includes:
searching for the deep reading keyword list from the content library based on the content identifier, where the found deep reading keyword list is a deep reading keyword list of content indicated by the content identifier.

In a possible implementation, the deep reading request carries the deep reading keyword list of the content currently browsed by the user; and the obtaining, based on the deep reading request, a deep reading keyword list of content currently browsed by the user includes:
obtaining, from the deep reading request, the deep reading keyword list of the content currently browsed by the user

According to a second aspect, an embodiment of this application provides a content recommendation method. The method is applied to an electronic device, and includes:
receiving a deep reading selection operation of a user, and sending a deep reading request to a server, where the deep reading request includes a content identifier or a deep reading keyword list that is of content currently browsed by the user, and the content currently browsed by the user is content displayed by the electronic device to the user when the deep reading selection operation of the user is received;
receiving deep reading information sent by the server in response to the deep reading request, where the deep reading information is obtained by the server by obtaining a deep reading content list based on the content identifier or the deep reading keyword list and mapping content in the deep reading content list to an entry of a deep reading display style; and
displaying the deep reading information in a preset display area.

In a possible implementation, the receiving a deep reading selection operation of a user includes:
receiving a selection operation performed by the user on a content details page for a deep reading button; or
receiving a selection operation performed by the user on a content details page for a deep reading tab.

According to a third aspect, an embodiment of this application provides a server, including:
one or more processors, a memory, and one or more computer programs, where the one or more computer programs are stored in the memory, the one or more computer programs include instructions, and when the instructions are executed by a device, the device is enabled to perform the method according to any implementation of the first aspect.

According to a fourth aspect, an embodiment of this application provides an electronic device, including:
a display, one or more processors, a memory, and one or more computer programs, where the one or more computer programs are stored in the memory, the one or more computer programs include instructions, and when the instructions are executed by a device, the device is enabled to perform the method according to any implementation of the second aspect.

According to a fifth aspect, an embodiment of this application provides a computer-readable storage medium. The computer-readable storage medium stores a computer program, and when the computer program runs on a computer, the computer is enabled to perform the method according to any implementation of the first aspect.

According to a sixth aspect, an embodiment of this application provides a computer-readable storage medium. The computer-readable storage medium stores a computer program, and when the computer program runs on a computer, the computer is enabled to perform the method according to any implementation of the second aspect.

According to a seventh aspect, this application provides a computer program. When the computer program is executed by a computer, the computer is configured to perform the method according to the first aspect or the second aspect.

In a possible design, all or some of programs in the seventh aspect may be stored in a storage medium that is encapsulated with a processor, or some or all of programs may be stored in a memory that is not encapsulated with a processor.

### BRIEF DESCRIPTION OF DRAWINGS

To describe technical solutions in embodiments of the present invention more clearly, the following briefly introduces the accompanying drawings used in describing embodiments. It is clearly that the accompanying drawings in the following descriptions show merely some embodiments of the present invention, and a person of ordinary skill in the art may still derive other drawings from these accompanying drawings without creative efforts.
FIG. 1A and FIG. 1B are example diagrams of related recommendations in the conventional technology;
FIG. 2A and FIG. 2B are thematic example diagrams of hot events in the conventional technology;
FIG. 3 is a diagram of a structure of an electronic device according to an embodiment of this application;
FIG. 4 is a diagram of a software structure of an electronic device according to an embodiment of this application;
FIG. 5 is an example diagram of a system architecture in a content recommendation method according to this application;
FIG. 6 is an example diagram of a UI interface of a content recommendation method according to this application;
FIG. 7 is another example diagram of a UI interface of a content recommendation method according to this application;
FIG. 8 is a flowchart of an embodiment of a content recommendation method according to this application;
FIG. 9 is an example diagram of an original knowledge graph of a content recommendation method according to this application;
FIG. 10 is a flowchart of a deep reading content generation manner of a content recommendation method according to this application;
FIG. 11 is an example diagram of a first knowledge graph of a content recommendation method according to this application;
FIG. 12 is a flowchart of a method for implementing one step of a content recommendation method according to this application;
FIG. 13 is a schematic diagram of an example of deep reading information according to this application;
FIG. 14 is a schematic diagram of another example of deep reading information according to this application;
FIG. 15 is a flowchart of another embodiment of a content recommendation method according to this application;
FIG. 16 is a flowchart of still another embodiment of a content recommendation method according to this application;
FIG. 17 is a flowchart of an embodiment of a content recommendation apparatus according to this application; and
FIG. 18 is a flowchart of another embodiment of a content recommendation apparatus according to this application.

### DESCRIPTION OF EMBODIMENTS

Terms used in embodiments of this application are only used to explain specific embodiments of this application, but are not intended to limit this application.

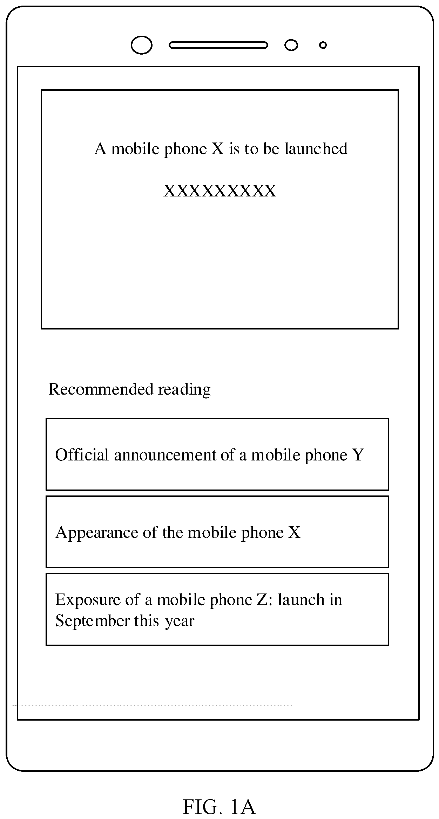

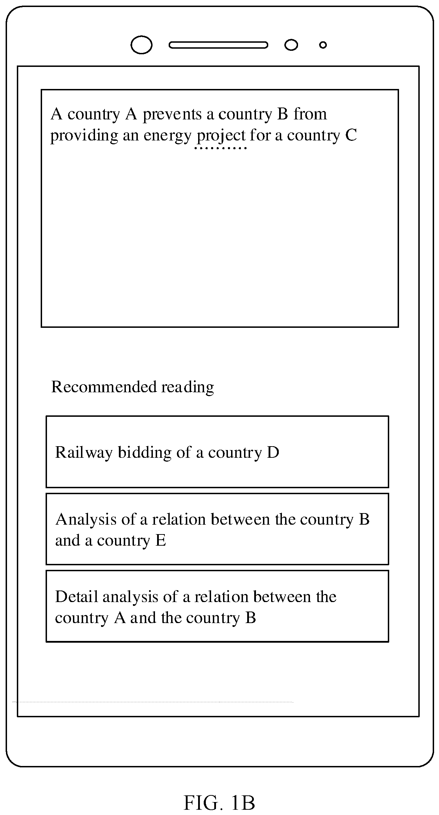

To provide better reading experience for a user, in an instance, a recommendation reading section is provided for the user on a content details page, and links of other content related to content are displayed in the section. A quantity of the links are usually 3, as shown in schematic diagrams of FIG. 1A and FIG. 1B. In FIG. 1A, following an introduction of a mobile phone product of an X brand, news content of other mobile phone products is recommended. In FIG. 1A, links of three pieces of news content are used as an example: "Official announcement of a mobile phone Y", "Appearance of the mobile phone X", and "Exposure of a mobile phone Z: launch in September this year". In FIG. 1B, following an introduction of news that a country A prevents a country B from providing an energy project for a country C, news content such as "Railway bidding of a country D", "Analysis of a relation between the country B and a country E", and "Analysis of a relation between the country A and the country B" is recommended. However, the recommended reading content provided for the user is only content associated with the content currently browsed. A content correlation standard is quiet broad, and the content recommended to the user is not systematic. In addition, an operation of continuously opening a link to view a content details page by the user increases a data processing amount of an electronic device and a data transmission amount between the electronic device and a server of a reading-related application.

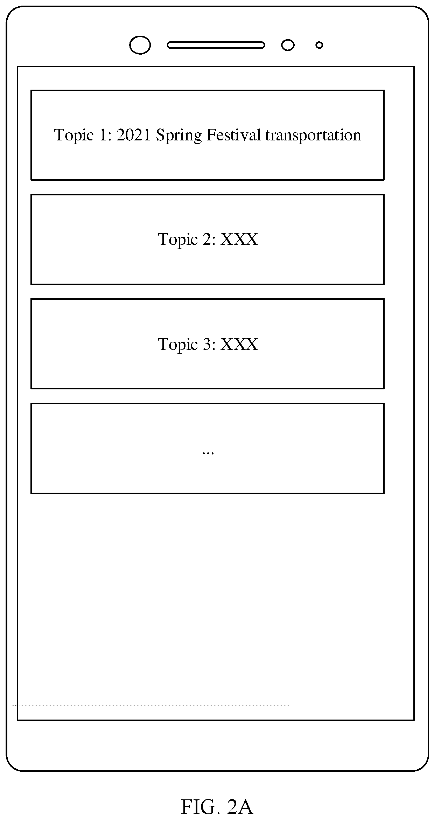

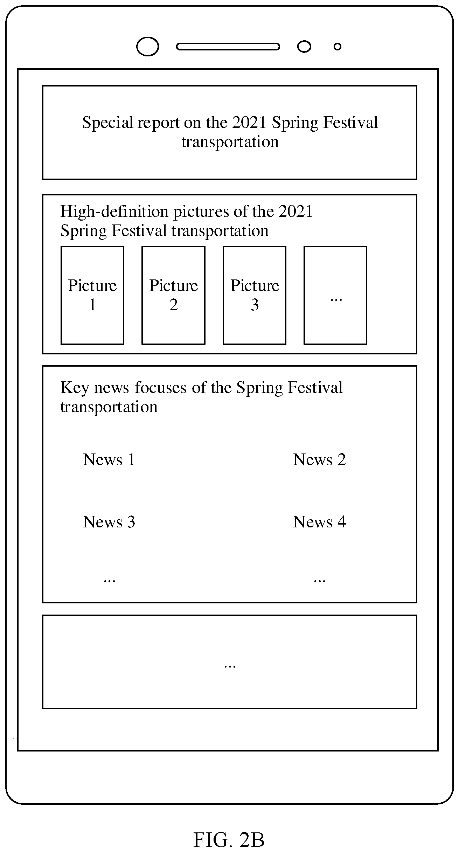

In another instance, a topic is created in a manual editing manner based on hot content, and a type of content related to a hot event is aggregated for the user to read completely. FIG. 2A is a schematic diagram of a topic list. For example, a topic 1 is about 2021 Spring Festival transportation. FIG. 2B is a schematic diagram of specific content of the topic 1. The news about the 2021 Spring Festival transportation is divided into sections such as large high-definition pictures and key news focuses, and corresponding content is separately displayed. This way of creating a topic is systematic, but is limited to some hot events, and is manually created. Consequently, a topic of each piece of content cannot be created for a user to browse.

Therefore, embodiments of this application provide a content recommendation method and an electronic device, to automatically generate systematically recommended content for a user based on content browsed by the user, so as to reduce an invalid operation of the user, improve reading efficiency of the user, and improve user experience.

In addition, a data processing amount and a data transmission amount of the electronic device for an invalid operation can be correspondingly reduced.

The method provided in this embodiment of this application may be applied to the electronic device, for example, a mobile phone, a tablet computer (Pad, portable android device), a personal computer (PC, personal computer), a smart screen, or an intelligent connected vehicle (Intelligent Connected Vehicle, ICV for short), smart/intelligent vehicle (smart/intelligent vehicle), or a vehicle-mounted device. The method provided in this embodiment of this application may be further applied to a server. The server may be a single server or a server cluster including several servers.

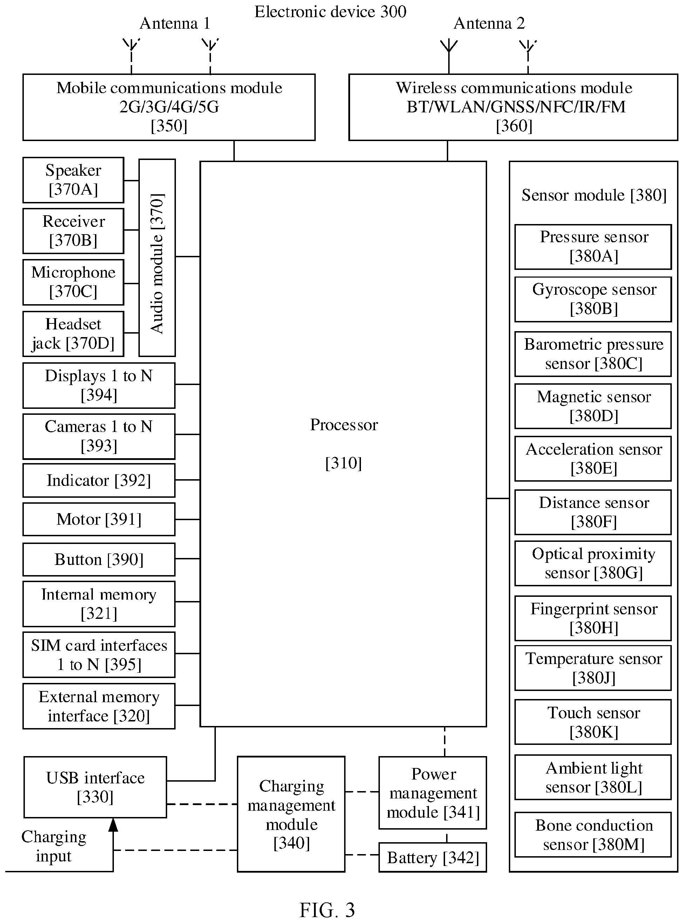

For example, FIG. 3 is a schematic diagram of a structure of an electronic device 300. The electronic device 300 may include a processor 310, an external memory interface 320, an internal memory 321, a universal serial bus (universal serial bus, USB) interface 330, a charging management module 340, a power management module 341, a battery 342, an antenna 1, an antenna 2, a mobile communications module 350, a wireless communications module 360, an audio module 370, a speaker 370A, a receiver 370B, a microphone 370C, a headset jack 370D, a sensor module 380, a button 390, a motor 391, an indicator 392, a camera 393, a display 394, a subscriber identity module (subscriber identity module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It may be understood that the structure shown in this embodiment of the present invention does not constitute a specific limitation on the electronic device 300. In some other embodiments of this application, the electronic device 300 may include more or fewer components than those shown in the figure, or combine some components, or split some components, or have different component arrangements. The components shown in the figure may be implemented by hardware, software, or a combination of software and hardware.

The processor 310 may include one or more processing units. For example, the processor 310 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural network processing unit, NPU). Different processing units may be independent components, or may be integrated into one or more processors

The controller may generate an operation control signal based on instruction operation code and a time sequence signal, to control instruction fetching and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces a waiting time of the processor 310, thereby improving system efficiency.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 310 may include a plurality of groups of I2C buses. The processor 310 may be coupled to the touch sensor 380K, a charger, a flash, the camera 393, and the like through different I2C bus interfaces. For example, the processor 310 may be coupled to the touch sensor 380K through the I2C interface, so that the processor 310 communicates with the touch sensor 380K through the I2C bus interface, to implement a touch function of the electronic device 300.

The I2S interface may be configured to perform audio communication. In some embodiments, the processor 310 may include a plurality of groups of I2S buses. The processor 310 may be coupled to the audio module 370 through the I2S bus, to implement communication between the processor 310 and the audio module 370. In some embodiments, the audio module 370 may transmit an audio signal to the wireless communications module 360 through the I2S interface, to implement a function of answering a call by using a Bluetooth headset.

The PCM interface may also be configured to: perform audio communication, and sample, quantize, and code an analog signal. In some embodiments, the audio module 370 may be coupled to the wireless communications module 360 through the PCM bus interface. In some embodiments, the audio module 370 may alternatively transmit an audio signal to the wireless communications module 360 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 310 to the wireless communications module 360. For example, the processor 310 communicates with a Bluetooth module in the wireless communications module 360 through the UART interface, to implement a Bluetooth function. In some embodiments, the audio module 370 may transmit an audio signal to the wireless communications module 360 through the UART interface, to implement a function of playing music by using a Bluetooth headset.

The MIPI interface may be configured to connect the processor 310 to a peripheral component such as the display 394 or the camera 393. The MIPI interface includes a camera serial interface (camera serial interface, CSI), a display serial interface (display serial interface, DSI), and the like. In some embodiments, the processor 310 communicates with the camera 393 through the CSI interface, to implement a photographing function of the electronic device 300. The processor 310 communicates with the display 394 through the DSI interface, to implement a display function of the electronic device 300.

The GPIO interface may be configured by software. The GPIO interface may be configured as a control signal or a data signal. In some embodiments, the GPIO interface may be configured to connect the processor 310 to the camera 393, the display 394, the wireless communications module 360, the audio module 370, the sensor module 380, and the like. The GPIO interface may alternatively be configured as an I2C interface, an I2S interface, a UART interface, an MIPI interface, or the like.

The USB interface 330 is an interface that conforms to USB standard specifications, and may specifically be a mini USB interface, a micro USB interface, a USB Type-C interface, or the like. The USB interface 330 may be configured to connect to the charger to charge the electronic device 300, or may be configured to perform data transmission between the electronic device 300 and a peripheral device, or may be configured to connect to a headset to play audio by using the headset, or may be configured to connect to another electronic device such as an AR device.

It may be understood that an interface connection relationship between the modules shown in this embodiment of the present invention is merely an example for description, and does not constitute a limitation on the structure of the electronic device 300. In some other embodiments of this application, the electronic device 300 may alternatively use an interface connection manner different from the interface connection manner in the foregoing embodiment, or a combination of a plurality of interface connection manners.

The charging management module 340 is configured to receive a charging input from the charger. The charger may be a wireless charger or a wired charger. In some embodiments of wired charging, the charging management module 340 may receive a charging input from the wired charger through the USB interface 330. In some embodiments of wireless charging, the charging management module 340 may receive a wireless charging input through a wireless charging coil of the electronic device 300. The charging management module 340 may further supply power to the electronic device by using the power management module 341 while charging the battery 342.

The power management module 341 is configured to connect the battery 342 and the charging management module 340 to the processor 310. The power management module 341 receives an input of the battery 342 and/or the charging management module 340, and supplies power to the processor 310, the internal memory 321, the display 394, the camera 393, the wireless communications module 360, and the like. The power management module 341 may further be configured to monitor parameters such as a battery capacity, a battery cycle count, and a battery health status (electric leakage or impedance). In some other embodiments, the power management module 341 may alternatively be disposed in the processor 310. In some other embodiments, the power management module 341 and the charging management module 340 may alternatively be disposed in a same device.

A wireless communication function of the electronic device 300 may be implemented through the antenna 1, the antenna 2, the mobile communications module 350, the wireless communications module 360, the modem processor, the baseband processor, and the like.

The antenna 1 and the antenna 2 are configured to transmit and receive electromagnetic wave signals. Each antenna in the electronic device 300 may be configured to cover one or more communications frequency bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communications module 350 may provide a solution, applied to the electronic device 300, to wireless communication including 2G, 3G, 4G, 5G, and the like. The mobile communications module 350 may include at least one filter, a switch, a power amplifier, a low noise amplifier (low noise amplifier, LNA), and the like. The mobile communications module 350 may receive an electromagnetic wave through the antenna 1, perform processing such as filtering or amplification on the received electromagnetic wave, and transmit a processed electromagnetic wave to the modem processor for demodulation. The mobile communications module 350 may further amplify a signal modulated by the modem processor, and convert an amplified signal into an electromagnetic wave for radiation through the antenna 1. In some embodiments, at least some function modules in the mobile communications module 350 may be disposed in the processor 310. In some embodiments, at least some function modules in the mobile communications module 350 may be disposed in a same device as at least some modules in the processor 310.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 370A, the receiver 370B, or the like), or displays an image or video by using the display 394. In some embodiments, the modem processor may be an independent component. In some other embodiments, the modem processor may be independent of the processor 310, and is disposed in a same device as the mobile communications module 350 or another function module.

The wireless communications module 360 may provide a solution, applied to the electronic device 300, to wireless communication including a wireless local area network (wireless local area network, WLAN) (such as, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communications module 360 may be one or more components integrating at least one communications processing module. The wireless communications module 360 receives an electromagnetic wave through the antenna 2, performs frequency modulation and filtering processing on the electromagnetic wave signal, and sends a processed signal to the processor 310. The wireless communications module 360 may further receive a to-be-sent signal from the processor 310, perform frequency modulation and amplification on the signal, and convert the signal into an electromagnetic wave for radiation through the antenna 2.

In some embodiments, in the electronic device 300, the antenna 1 and the mobile communications module 350 are coupled, and the antenna 2 and the wireless communications module 360 are coupled, so that the electronic device 300 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 300 implements a display function by using the GPU, the display 394, the application processor, and the like. The GPU is a microprocessor for image processing, and is connected to the display 394 and the application processor. The GPU is configured to: perform mathematical and geometric computation, and render an image. The processor 310 may include one or more GPUs that execute program instructions to generate or change display information.

The display 394 is configured to display an image, a video, and the like. The display 394 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like In some embodiments, the electronic device 300 may include one or N displays 394, where N is a positive integer greater than 1.

The electronic device 300 may implement a photographing function by using the ISP, the camera 393, the video codec, the GPU, the display 394, the application processor, and the like.

The ISP is configured to process data fed back by the camera 393. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 393.

The camera 393 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 300 may include one or N cameras 393, where N is a positive integer greater than 1.

The digital signal processor is configured to process a digital signal, and may further process another digital signal in addition to the digital image signal. For example, when the electronic device 300 selects a frequency, the digital signal processor is configured to perform Fourier transform on frequency energy.

The video codec is configured to compress or decompress a digital video. The electronic device 300 may support one or more video codecs. In this way, the electronic device 300 may play or record videos in a plurality of coding formats, for example, moving picture experts group (moving picture experts group, MPEG)-1, MPEG-2, MPEG-3, and MPEG-4.

The NPU is a neural network (neural network, NN) computing processor, quickly processes input information by referring to a structure of a biological neural network, for example, by referring to a mode of transmission between human brain neurons, and may further continuously perform self-learning. The NPU can implement applications such as intelligent cognition of the electronic device 300, such as image recognition, facial recognition, speech recognition, and text understanding.

The external memory interface 320 may be configured to connect to an external storage card, for example, a micro SD card, to extend a storage capability of the electronic device 300. The external storage card communicates with the processor 310 through the external memory interface 320, to implement a data storage function. For example, files such as music and a video are stored in the external memory card.

The internal memory 321 may be configured to store computer-executable program code, and the executable program code includes instructions. The internal memory 321 may include a program storage area and a data storage area. The program storage area may store an operating system, an application required by at least one function (for example, a sound playing function or an image playing function), and the like. The data storage area may store data (for example, audio data and a phone book) and the like created when the electronic device 300 is used. In addition, the internal memory 321 may include a high-speed random access memory, and may further include a nonvolatile memory, for example, at least one magnetic disk storage device, a flash memory, or a universal flash storage (universal flash storage, UFS). The processor 310 runs instructions stored in the internal memory 321 and/or instructions stored in the memory disposed in the processor, to perform various function applications of the electronic device 300 and data processing.

The electronic device 300 may implement an audio function such as music playing and recording by using the audio module 370, the speaker 370A, the receiver 370B, the microphone 370C, the headset jack 370D, the application processor, and the like.

The audio module 370 is configured to convert digital audio information into an analog audio signal for output, and is also configured to convert an analog audio input into a digital audio signal. The audio module 370 may further be configured to code and decode an audio signal. In some embodiments, the audio module 370 may be disposed in the processor 310, or some function modules in the audio module 370 are disposed in the processor 310.

The speaker 370A, also referred to as a "horn", is configured to convert an audio electrical signal into a sound signal. The electronic device 300 may listen to music or answer a call in a hand-free mode by using the speaker 370A.

The receiver 370B, also referred to as an "earpiece", is configured to convert an audio electrical signal into a sound signal. When a call is answered or voice information is received by using the electronic device 300, the receiver 370B may be put close to a human ear to listen to a voice.

The microphone 370C, also referred to as a "mike" or a "microphone", is configured to convert a sound signal into an electrical signal. When making a call or sending voice information, a user may make a sound near the microphone 370C through the mouth of the user, to enter a sound signal to the microphone 370C. At least one microphone 370C may be disposed in the electronic device 300. In some other embodiments, two microphones 370C may be disposed in the electronic device 300, to collect a sound signal and implement a noise reduction function. In some other embodiments, three, four, or more microphones 370C may alternatively be disposed in the electronic device 300, to collect a sound signal, implement noise reduction, identify a sound source, implement a directional recording function, and the like.

The headset jack 370D is configured to connect to a wired headset. The headset jack 370D may be the USB interface 330, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 380A is configured to sense a pressure signal, and can convert the pressure signal into an electrical signal. In some embodiments, the pressure sensor 380A may be disposed on the display 394. There are a plurality of types of pressure sensors 380A, for example, a resistive pressure sensor, an inductive pressure sensor, and a capacitive pressure sensor. The capacitive pressure sensor may include at least two parallel plates made of conductive materials. When force is applied to the pressure sensor 380A, capacitance between electrodes changes. The electronic device 300 determines pressure strength based on the change of the capacitance. When a touch operation is performed on the display 394, the electronic device 300 detects strength of the touch operation by using the pressure sensor 380A. The electronic device 300 may also calculate a touch location based on a detection signal of the pressure sensor 380A. In some embodiments, touch operations that are performed at a same touch location but have different touch operation strength may correspond to different operation instructions. For example, when a touch operation whose touch operation strength is less than a first pressure threshold is performed on an icon of Messages, an instruction for viewing an SMS message is performed. When a touch operation whose touch operation strength is greater than or equal to the first pressure threshold is performed on the icon of Messages, an instruction for creating a new SMS message is performed.

The gyroscope sensor 380B may be configured to determine a motion posture of the electronic device 300. In some embodiments, an angular velocity of the electronic device 100 around three axes (namely, axes x, y, and z) may be determined by using the gyroscope sensor 380B. The gyroscope sensor 380B may be configured to implement image stabilization during photographing. For example, when the shutter is pressed, the gyroscope sensor 380B detects an angle at which the electronic device 300 jitters, calculates, based on the angle, a distance for which a lens module needs to compensate, and allows the lens to cancel the jitter of the electronic device 300 through reverse motion, to implement image stabilization. The gyroscope sensor 380B may also be used in a navigation scenario and a motion-controlled gaming scenario.

The barometric pressure sensor 380C is configured to measure barometric pressure. In some embodiments, the electronic device 300 calculates an altitude based on a barometric pressure value measured by the barometric pressure sensor 380C, to assist positioning and navigation.

The magnetic sensor 380D includes a Hall effect sensor. The electronic device 300 may detect opening or closing of a flip cover by using the magnetic sensor 380D. In some embodiments, when the electronic device 300 is a flip phone, the electronic device 300 may detect opening and closing of a flip cover based on the magnetic sensor 380D. Further, a feature such as automatic unlocking upon opening of the flip cover is set based on a detected opening or closing state of the flip cover.

The acceleration sensor 380E may detect magnitudes of accelerations in various directions (usually on three axes) of the electronic device 300, and may detect a magnitude and a direction of gravity when the electronic device 300 is still. The acceleration sensor 380E may further be configured to identify a posture of the electronic device, and is applied to an application such as switching between a landscape mode and a portrait mode or a pedometer.

The distance sensor 380F is configured to measure a distance. The electronic device 300 may measure a distance in an infrared manner or a laser light manner. In some embodiments, in a photographing scenario, the electronic device 300 may measure a distance by using the distance sensor 380F, to implement quick focusing.

The optical proximity sensor 380G may include, for example, a light-emitting diode (LED) and an optical detector, for example, a photodiode. The light-emitting diode may be an infrared light-emitting diode. The electronic device 300 emits infrared light by using the light-emitting diode. The electronic device 300 detects infrared reflected light from a nearby object by using the photodiode. When sufficient reflected light is detected, the electronic device 300 may determine that there is an object near the electronic device 300. When insufficient reflected light is detected, the electronic device 300 may determine that there is no object near the electronic device 300. The electronic device 300 may detect, by using the optical proximity sensor 380G, that the user holds the electronic device 300 close to an ear to make a call, to automatically perform screen-off for power saving. The optical proximity sensor 380G may also be used in a smart cover mode or a pocket mode to automatically perform screen unlocking or locking.

The ambient light sensor 380L is configured to sense ambient light brightness. The electronic device 300 may adaptively adjust brightness of the display 394 based on the sensed ambient light brightness. The ambient light sensor 380L may also be configured to automatically adjust white balance during photographing. The ambient light sensor 380L may further cooperate with the optical proximity sensor 380G to detect whether the electronic device 300 is in a pocket, to avoid an accidental touch.

The fingerprint sensor 380H is configured to collect a fingerprint. The electronic device 300 may use a feature of the collected fingerprint to implement fingerprint-based unlocking, application lock access, fingerprint-based photographing, fingerprint-based call answering, and the like.

The temperature sensor 380J is configured to detect a temperature. In some embodiments, the electronic device 300 executes a temperature processing policy by using the temperature detected by the temperature sensor 380J. For example, when the temperature reported by the temperature sensor 380J exceeds a threshold, the electronic device 300 lowers performance of a processor near the temperature sensor 380J, to reduce power consumption for thermal protection. In some other embodiments, when the temperature is less than another threshold, the electronic device 300 heats the battery 342 to prevent the electronic device 300 from being shut down abnormally because of a low temperature. In some other embodiments, when the temperature is less than still another threshold, the electronic device 300 boosts an output voltage of the battery 342 to avoid abnormal shutdown caused by a low temperature.

The touch sensor 380K is also referred to as a "touch component". The touch sensor 380K may be disposed on the display 394, and the touch sensor 380K and the display 394 form a touchscreen, which is also referred to as a "touchscreen". The touch sensor 380K is configured to detect a touch operation on or near the touch sensor 380K. The touch sensor may transfer the detected touch operation to the application processor to determine a type of the touch event. The display 394 may provide a visual output related to the touch operation. In some other embodiments, the touch sensor 380K may alternatively be disposed on a surface of the electronic device 300 at a location different from that of the display 394.

The bone conduction sensor 380M may obtain a vibration signal. In some embodiments, the bone conduction sensor 380M may obtain a vibration signal of a vibration bone of a human vocal-cord part. The bone conduction sensor 380M may also be in contact with a human pulse, to receive a blood pressure beating signal. In some embodiments, the bone conduction sensor 380M may alternatively be disposed in the headset, to obtain a bone conduction headset. The audio module 370 may obtain a voice signal through parsing based on the vibration signal that is of the vibration bone of the vocal-cord part and that is obtained by the bone conduction sensor 380M, to implement a voice function. The application processor may parse heart rate information based on the blood pressure beating signal obtained by the bone conduction sensor 380M, to implement a heart rate detection function.

The button 390 includes a power button, a volume button, and the like. The button 390 may be a mechanical button, or may be a touch button. The electronic device 300 may receive a key input, and generate a key signal input related to a user setting and function control of the electronic device 300.

The motor 391 may generate a vibration prompt. The motor 391 may be configured to provide an incoming call vibration prompt and a touch vibration feedback. For example, touch operations performed on different applications (for example, photographing and audio playing) may correspond to different vibration feedback effects. The motor 391 may also correspond to different vibration feedback effects for touch operations performed on different areas of the display 394. Different application scenarios (for example, a time reminder, information receiving, an alarm clock, and a game) may also correspond to different vibration feedback effects. A touch vibration feedback effect may be further customized.

The indicator 392 may be an indicator light, and may be configured to indicate a charging status and a power change, or may be configured to indicate a message, a missed call, a notification, and the like.

The SIM card interface 395 is configured to connect to a SIM card. The SIM card may be inserted into the SIM card interface 395 or detached from the SIM card interface 395, to implement contact with or separation from the electronic device 300. The electronic device 300 may support one or N SIM card interfaces, where N is a positive integer greater than 1. The SIM card interface 395 may support a nano SIM card, a micro SIM card, a SIM card, and the like. A plurality of cards may be simultaneously inserted into a same SIM card interface 395. The plurality of cards may be of a same type or different types. The SIM card interface 395 is compatible with different types of SIM cards. The SIM card interface 395 is also compatible with an external memory card. The electronic device 300 interacts with a network through the SIM card, to implement functions such as calling and data communication. In some embodiments, the electronic device 300 uses an eSIM, namely, an embedded SIM card. The eSIM card may be embedded into the electronic device 300, and cannot be separated from the electronic device 300.

A software system of the electronic device 300 may use a layered architecture, an event-driven architecture, a micro kernel architecture, a micro service architecture, or a cloud architecture. In this embodiment of the present invention, an Android system of a layered architecture is used as an example to illustrate a software structure of the electronic device 300.

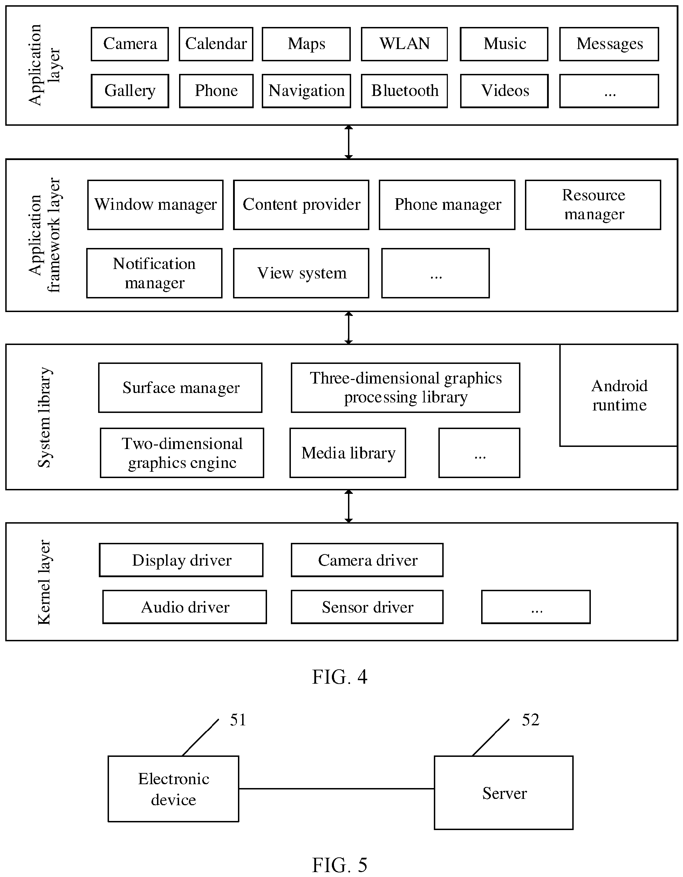

FIG. 4 is a block diagram of the software structure of the electronic device 300 according to this embodiment of the present invention.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history and a bookmark, a phone book, and the like.

The view system includes visual controls, such as a control for displaying a text and a control for displaying a photo. The view system may be configured to construct an application. A display interface may include one or more views. For example, a display interface including an SMS message notification icon may include a text display view and a photo display view.

The phone manager is configured to provide a communication function for the electronic device 300, for example, management of a call status (including answering, declining, or the like).

The resource manager provides various resources such as a localized character string, an icon, a photo, a layout file, and a video file for an application.

The notification manager enables an application to display notification information in a status bar, and may be configured to convey a notification type message. The displayed notification information may automatically disappear after a short pause and require no user interaction. For example, the notification manager is configured to notify download completion, give a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is prompted in the status bar, an alert sound is played, the electronic device vibrates, or the indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, an electronic device having the structures shown in FIG. 3 and FIG. 4 is used as an example to describe in detail the method provided in embodiments of this application with reference to the accompanying drawings and application scenarios.

First, content in embodiments of this application is described as an example but not a limitation.

The content in embodiments of this application refers to information including a photo, a text, and/or the like, and the information may be displayed on an interface of the electronic device. For example, an article, news, a photo, a set of photos, a novel, and the like that are displayed in a reading-related app of the electronic device may be referred to as content in embodiments of this application. A piece of content can include a title and a body.

FIG. 5 shows a network architecture to which a content recommendation method in embodiments of this application is applicable. The network architecture includes an electronic device 51 and a server 52.

The server 52 may be one server, or a server cluster including a plurality of servers. Optionally, the server 52 may be a cloud server.

The electronic device 51 is provided with a reading-related app that displays content for a user, for example, a news-related app or a browser. The electronic device 51 may display a content list for the user by using the reading-related app. After detecting that the user selects a piece of content in the content list, the electronic device displays a content details interface to the user. The content details interface displays the piece of content.

Data such as the content list and the content details interface that are displayed by the electronic device 51 is transmitted to the electronic device 51 by the server 52 of the reading-related app.

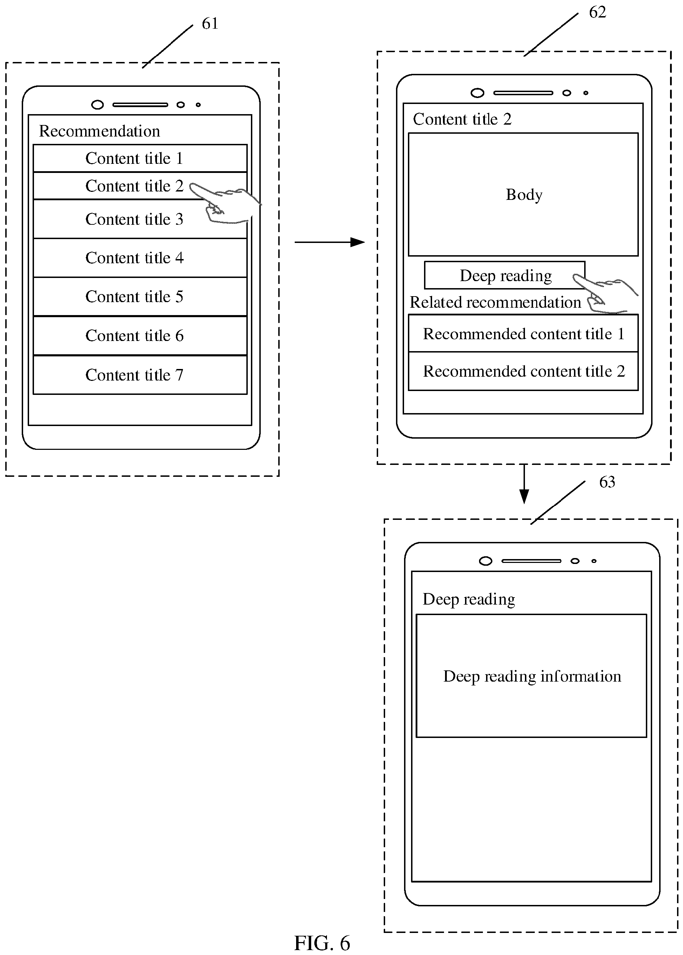

First, implementation of the content recommendation method in embodiments of this application is described from a perspective of a user interface (user interface, UI), as shown in FIG. 6.

In a part 61 in FIG. 6, the electronic device displays a content list for the user. Specifically, in the content list displayed on an interface shown in the part 61, a title of each piece of content may be displayed in a section. When the user performs a selection operation, for example, one mouse click, to select a piece of content on the interface, the electronic device detects the selection operation of the user, and correspondingly displays a content details interface. The content details interface displays the piece of content selected by the user, as shown in a part 62 in FIG. 6.

In the part 62 in FIG. 6, after browsing content on the content details interface, if the user is interested in the content, the user may perform a selection operation to select a deep reading button provided on the content details interface. Correspondingly, the electronic device detects the selection operation performed by the user on the deep reading button, and displays deep reading information of the content to the user. As shown in a part 63 in FIG. 6, the deep reading information is displayed by using a new interface. It should be noted that, the deep reading information in embodiments of this application is not a content list generated only based on content similarity of content currently browsed by the user as in the conventional technology, but a content list screened for the user based on the content currently browsed by the user and a knowledge profile of the user. Then, the content in the content list is mapped to a preset display style, to obtain the deep reading information. The deep reading information may include panoramic knowledge related to the content currently browsed by the user, instead of fragmented knowledge in the conventional technology. In addition, the deep reading information is generated based on the knowledge profile of the user. Therefore, on a basis of ensuring that the user can recognize the content, new content can be added for the user, so that the user can obtain new knowledge from the deep reading information and expand a knowledge range.

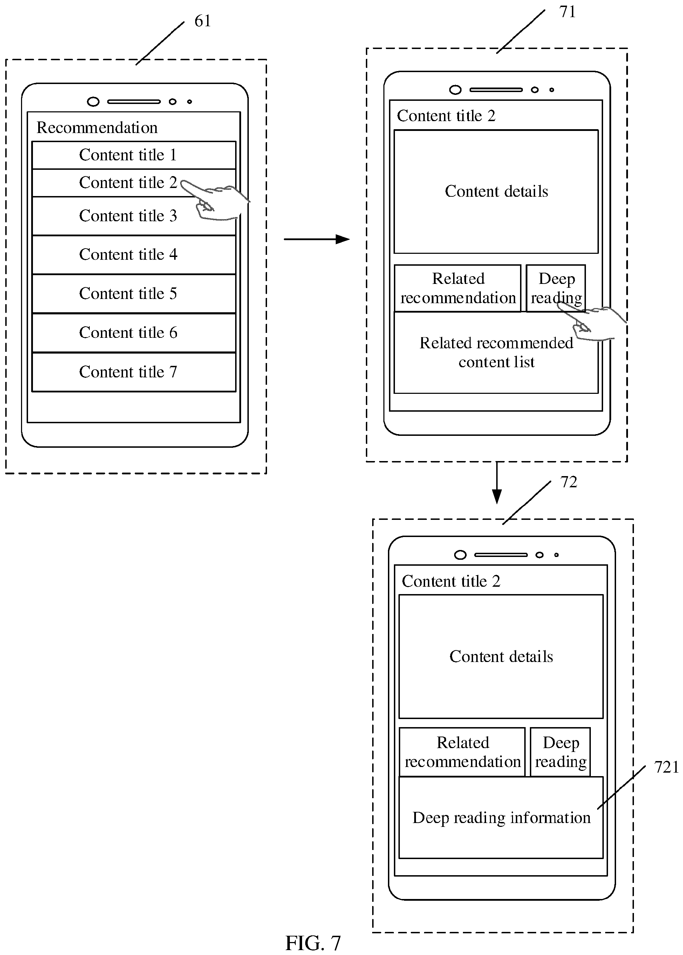

Optionally, as shown in FIG. 7, the part 62 and the part 63 in FIG. 6 may further be replaced with a part 71 and a part 72. In the part 71, deep reading is used as a tab (tab) at a same level as a related recommendation. The user may perform a selection operation to select a related recommendation tab to browse the content list generated based on the content similarity in the conventional technology, or select a deep reading tab to browse the deep reading information generated in embodiments of this application. For example, as shown in the part 72 in FIG. 7, if the user performs a selection operation to select the deep reading tab, correspondingly, the electronic device may detect the selection operation of the user, and display the deep reading information in a section 721.

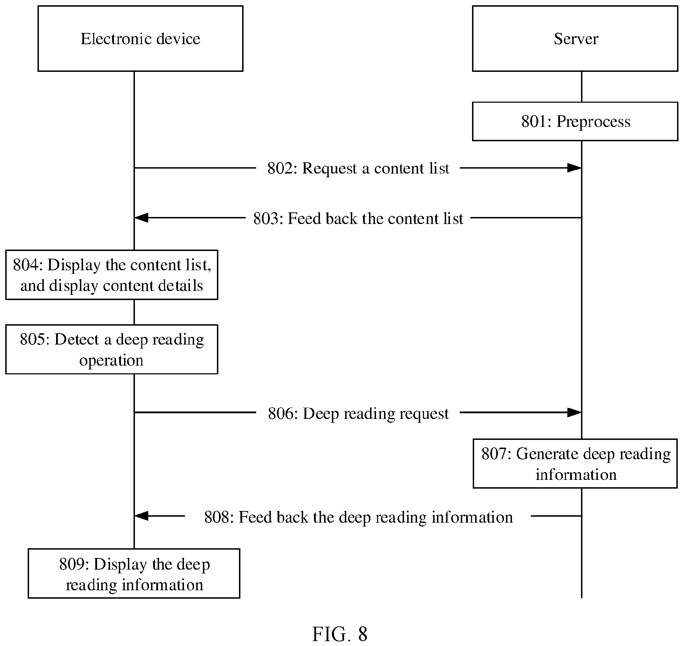

FIG. 8 is a flowchart of an embodiment of a content recommendation method according to this application.

Step 801: A preprocessing step in a server

The server stores a content library, the content library includes several pieces of content, and a specific quantity of pieces of content included in the content library is not limited in this embodiment of this application. Each piece of content includes a title and a body. In addition, each piece of content further has corresponding parameters of various dimensions. For example, each piece of content may have a content identifier, and the content identifier is used to uniquely identify one piece of content. Each piece of content may further have parameters of dimensions such as a content tab, a classification tab, a topic depth tab, and a style tab. Specific descriptions are provided in the following. Details are not described herein again.

The preprocessing performed by the server in this step mainly includes: presetting a deep reading keyword list for each piece of content. A deep reading keyword list of one piece of content may be automatically set by the server for the content, or may be manually set. This is not limited in this embodiment of this application. A deep reading keyword list of one piece of content may include one or more keywords. A specific quantity is not limited in this embodiment of this application.

If in step 806, the electronic device obtains, in real time, a deep reading keyword of content currently browsed by a user, this step may be omitted.

Step 802: An electronic device requests a content list from the server.

Step 803: The server feeds back the content list to the electronic device.

The content list in steps 802 and 803 is generally a content list displayed by the electronic device to the user when the user expects to browse content after the user opens a reading-related app. The content list is generally generated by the server and sent to the electronic device when requested by the electronic device. A specific method of generating the content list is not limited in this embodiment of this application.

Step 804: The electronic device displays the content list to the user, and the electronic device obtains a selection operation performed by the user on one piece of content in the content list, obtains content indicated by the selection operation performed by the user, and displays the content to the user.

The content list at least includes a content title of each piece of content.

When sending the content list, the server may send each piece of content (that is, a title and a body) in the content list to the electronic device. In this step, the electronic device may obtain the content indicated by the selection operation from received data.

Alternatively, the content list may include a content title and a content identifier of each piece of content. In this step, the electronic device obtains a content identifier of one piece of content indicated by the selection operation, and sends the content identifier to the server to request content corresponding to the content identifier. Correspondingly, the server sends the content corresponding to the content identifier to the electronic device. In this way, the content indicated by the selection operation is obtained.

This step may correspond to the part 61 and the part 62 in FIG. 6, and may correspond to the part 61 and part 71 in FIG. 7. Details are not described herein again.

Step 805: When the user is interested in the content, the user performs a deep reading selection operation, and the electronic device obtains the deep reading selection operation of the user

This step may correspond to the part 62 in FIG. 6 and the part 71 in FIG. 7. Details are not described herein again.

Step 806: The electronic device sends a deep reading request message to the server, where the request message includes a content identifier of the content currently browsed by the user.

The content currently browsed by the user is content displayed by the electronic device to the user when the user performs the deep reading selection operation, that is, the content that includes a content title 2 and a body and that is displayed by the electronic device in the part 62 in FIG. 6 and the part 71 in FIG. 7.

Step 807: The server generates deep reading information based on the request message.

In this step, the server may obtain a deep reading keyword list of the content based on the content identifier in the request message, obtain a deep reading content list based on the deep reading keyword list, and map content in the deep reading content list to an entry of a preset display style of deep reading content, to generate deep reading information.

Step 808: The server sends the deep reading information to the electronic device.

Step 809: The electronic device displays the deep reading information to the user

This step may correspond to the part 63 in FIG. 6 and the part 72 in FIG. 7. Details are not described herein again.

After step 809 is performed, the user may browse the deep reading content, and experience deep reading by selecting content in the deep reading content.

Optionally, different from that the request message includes the content identifier in the embodiment shown in FIG. 8, in another embodiment, the request message in step 806 may include a deep reading keyword list of the content currently browsed by the user. A deep reading keyword list of each piece of content in the content list may be sent by the server to the electronic device when the server sends the content list.

Optionally, different from that in the embodiment shown in FIG. 8, in another embodiment, step 801 may not be performed, and the request message in step 806 may include a deep reading keyword list of the content currently browsed by the user. A keyword in the deep reading keyword list may be extracted in real time by the electronic device from the content currently browsed by the user.

For a method for extracting a deep reading keyword by the electronic device from the content currently browsed by the user, refer to a keyword extraction method in a related technology. Details are not described in this embodiment of this application again.

The following describes a process in which the server generates the deep reading information based on the deep reading keyword list.

The content library is set in the server. The content library includes several pieces of content. Each piece of content includes a title and a body. Each piece of content has but is not limited to the following parameters: a content identifier, a deep reading keyword list, a content tab, a topic depth tab, a classification tab, and a style tab.

In the method shown in FIG. 8, if the deep reading keyword list of the content currently browsed by the user is extracted by an electronic device embodiment, the deep reading keyword list of each piece of content in the content library is an optional parameter, and the deep reading keyword list of each piece of content is a set of keywords that are used for deep reading and that are set for the content. The deep reading keyword list of each piece of content may include one or more keywords. A specific quantity is not limited in this embodiment of this application.

The content tab is used to record a keyword of the content. There may be one or more content tabs of each piece of content. A specific quantity is not limited in this embodiment of this application. The content tab may include a deep reading keyword of the content, and may further include a keyword in addition to the deep reading keyword of the content.

The classification tab is used to record classification information of the content. The classification information may be hierarchical, so that the content may have classification information of each level. A higher level of classification information is a further subdivision of a lower level of classification information. A specific quantity of levels of classification information included in each piece of content is not limited in this embodiment of this application. For example, a first level of classification information may include: entertainment, military, news, sports, finance, science and technology, and the like; a second level of classification information of the entertainment may include: movies, TV series, variety shows, music, and the like; and a second level of classification information of the sports may include: NBA, CBA, Chinese Super League, Premier League, and the like. Based on this, classification information of a piece of content may include: entertainment, movies, and My People, My Country, which are a first level of classification information, a second level of classification information, and a third level of classification information in sequence.

The topic depth tab of the content is used to record a knowledge depth of the content in a knowledge field in which the content is located, and may be represented by a value or a level. A higher value or level of the topic depth indicates a deeper knowledge depth of the content in the knowledge field in which the content is located. For example, for content related to a novel coronavirus, a value or level of a topic depth of content of popular science knowledge is relatively low, and a value or level of a topic depth of content of a professional paper is relatively high.

The style entry tab of the content is used to record a style entry to which the content belongs. A style entry is an entry included in a deep reading display style, such as encyclopedia definition, data statistics, latest progress, deep content, related reading.

An original knowledge graph is set in the server

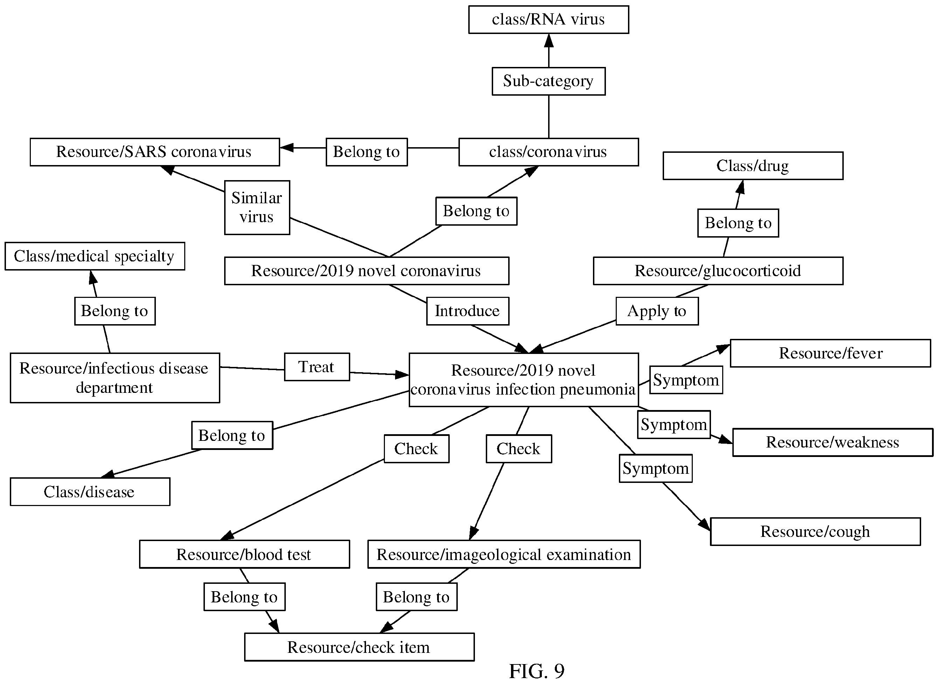

The knowledge graph is a series of different graphics showing a knowledge development process and a structure relationship. A knowledge resource and a carrier of the knowledge resource are described by using a visualization technology, to mine, analyze, construct, draw, and display knowledge and an interrelationship between the knowledge. The knowledge graph is generally a tree diagram. FIG. 9 is an example diagram of a structure of a knowledge graph. The knowledge graph is a directed tab graph. The knowledge graph includes tabs, and an association relationship is established between associated tabs in the knowledge graph. In FIG. 9, there is a directed line between the tabs, indicating that there is an association relationship between the tabs. A directed line between two tabs indicates a homing relationship between the two tabs. Information on some lines may be considered as classification information of a tab indicated by an arrow of the line. A tab "Resource/2019 novel coronavirus infection pneumonia" and a tab "Resource/fever" in FIG. 9 are used as an example. An arrowed line between the two tabs and classification information "Symptom" on the line indicate that "Resource/fever" is the tab under the classification "Symptom" of "Resource/2019 novel coronavirus infection pneumonia", that is, classification information of "Resource/fever" is "Symptom". To distinguish from the classification information of the content, classification information of the tab in the knowledge graph is referred to as tab classification information. The tab classification information in the knowledge graph may have a correspondence with the classification information of the content in the content library. To distinguish from a subsequent knowledge graph of the content currently browsed by the user, a knowledge graph set in the server is referred to as the original knowledge graph. To distinguish the tab in the knowledge graph from the content tab, the tab in the knowledge graph is referred to as a graph tab.

There is a correspondence between a deep reading keyword of each piece of content and a graph tab in the original knowledge graph. Generally, one deep reading keyword corresponds to one graph tab in the original knowledge graph. For example, the deep reading keyword may be the same as the graph tab in the original knowledge graph, so that there is a correspondence. Alternatively, correspondences between various different deep reading keywords and the graph tab in the original knowledge graph may be preset in the server. For example, the server may preset that there are correspondences between "2019 novel coronavirus", "novel coronavirus", "novel coronavirus pneumonia", "novel coronavirus", "novel coronavirus pneumonia", and the like, so that if a deep reading keyword is "novel coronavirus", the deep reading keyword may correspond to a graph tab "novel coronavirus" in the original knowledge graph.

Optionally, a deep reading keyword may be determined based on a graph tab in the original knowledge graph, that is, a piece of content is searched for whether there is a graph tab in the original knowledge graph. If there is the graph tab, the graph tab is set as a deep reading keyword of the piece of content. For example, the graph tabs in FIG. 9 include "novel coronavirus" and "glucocorticoid". If the two words "novel coronavirus" and "glucocorticoid" are found in a piece of content, "novel coronavirus" and " glucocorticoid" can be set as two deep reading keywords of the piece of content. For a relationship between a content tab and a graph tab, refer to a relationship between a deep reading keyword and a graph tab. Details are not described herein again.

A user profile of each user is set in the server

A user profile is a tab set obtained by abstracting each piece of specific information of a user into a tab. To distinguish from the content tab and the graph tab, a tab included in the user profile is referred to as a profile tab.

The user profile includes a knowledge profile of the user, and is a tab set formed by knowledge-related profile tabs in the profile tab of the user profile. Optionally, the knowledge profile may further include a profile tab related to basic information of the user, for example, a gender or an age.

For example, a user profile of a user may include: Gender: male; Job: doctor; Education: master's degree;

Age: 35; Sports: running; Log reading: science and technology news, and knowledge Q&A; and History reading: novel coronavirus, My People, My Country, and Chinese Super League. Then, a knowledge profile of the user may include: Gender: male; Job: doctor; Education: master's degree; Age: 35; Log reading: science and technology news, and knowledge Q&A; and History reading: novel coronavirus, My People, My Country, and Chinese Super League.

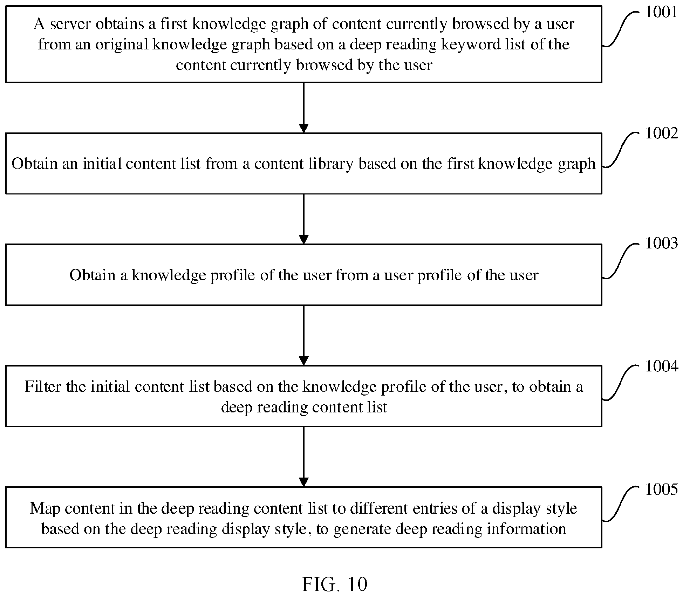

Based on the foregoing information preset in the server, a possible implementation process in which the server generates the deep reading information based on the deep reading keyword of the content currently browsed by the user is described. As shown in FIG. 10, the process includes:

Step 1001: The server obtains a first knowledge graph of the content currently browsed by the user from the original knowledge graph based on the deep reading keyword list of the content currently browsed by the user.

This step may include: Based on the deep reading keyword of the content currently browsed by the user (that is, a deep reading keyword included in the deep reading keyword list of the content currently browsed by the user), a first graph tab corresponding to the deep reading keyword is found in the original knowledge graph. The first knowledge graph is extracted from the original knowledge graph based on the found first graph tab. The first knowledge graph is a partial knowledge graph that is in the original knowledge graph and that includes the found first graph tab.

Optionally, that the first knowledge graph is extracted from the original knowledge graph based on the found first graph tab may include:

For each found first graph tab, a graph tab set that is in the original knowledge graph and whose distance from the first graph tab is not greater than a preset value is obtained.

The found first graph tab and the graph tab set corresponding to the first graph tab are combined to obtain a total graph tab set, and the total graph tab set is used as the first knowledge graph.

For a distance between two tabs in the knowledge graph, refer to a method for calculating a distance between two points in a graph theory. A quantity of connections included in a minimum path between the two tabs is used as the distance between the two tabs. For example, a distance between graph tabs "Resource/infectious disease department" and "Resource/2019 novel coronavirus" in FIG. 9 is 2, and a distance between "Resource/infectious disease department" and "Resource/2019 novel coronavirus infection pneumonia" is 1.

An implementation of extracting the first knowledge graph from the original knowledge graph based on the found first graph tab is described by using an example. The original knowledge graph shown in FIG. 9 is used as an example. If deep reading keywords are "novel coronavirus" and "glucocorticoid", corresponding first graph tabs "Resource/2019 novel coronavirus" and "Resource/glucocorticoid" may be found from the original knowledge graph shown in FIG. 9 based on the two deep reading keywords. It is assumed that the preset value is 1. For the first graph tab "Resource/2019 novel coronavirus", a graph tab set 1 (Resource/2019 novel coronavirus infection pneumonia, Resource/SARS coronavirus, and class/coronavirus) of graph tabs whose distance from the first graph tab "Resource/2019 novel coronavirus" is 1 may be obtained. For the first graph tab "Resource/glucocorticoid", a graph tab set 2 (class/drug, and Resource/2019 novel coronavirus infection pneumonia) of graph tabs whose distance from the first graph tab "Resource/glucocorticoid" is 1 may be obtained. The first graph tab and the graph tab sets 1 and 2 corresponding to the first graph tab are combined, to obtain a total graph tab set (Resource/2019 novel coronavirus, Resource/2019 novel coronavirus infection pneumonia, Resource/SARS coronavirus, class/coronavirus, class/drug, Resource/glucocorticoid).

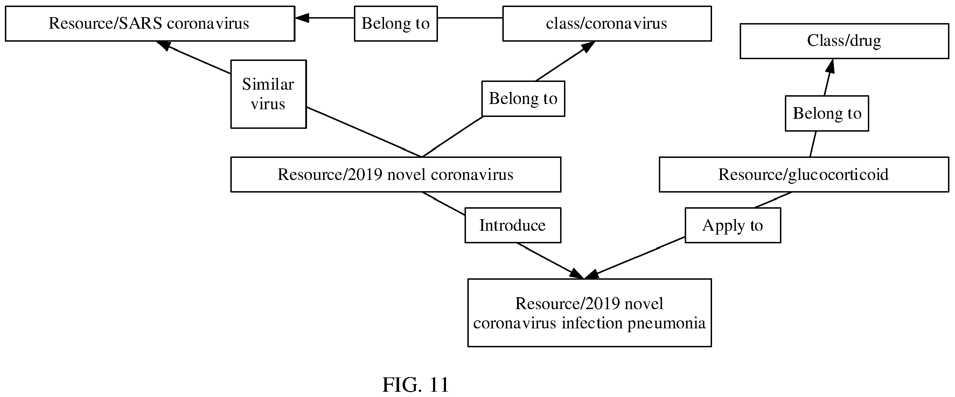

It should be noted that in the foregoing implementation, the total graph tab set is used as the first knowledge graph, and a path between the graph tabs is discarded. In another possible implementation, the foregoing relationship may not be discarded. In this case, for an obtained first knowledge graph, refer to FIG. 11. The first knowledge graph includes the graph tabs in the total graph tab set and the path between the graph tabs.

Step 1002: Obtain an initial content list from the content library based on the first knowledge graph.

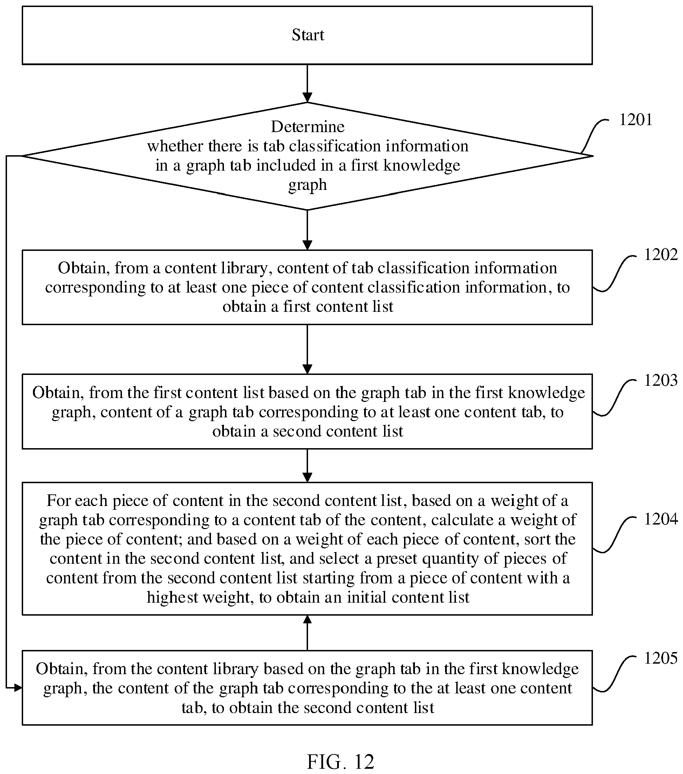

In a possible implementation, as shown in FIG. 12, this step may include:

Step 1201: Determine whether there is tab classification information in the graph tab included by the first knowledge graph. If yes, step 1202 is performed; or if no, step 1205 is performed.

Step 1202: Obtain, from the content library, content of tab classification information corresponding to at least one piece of content classification information, to obtain a first content list.

Step 1201 is an optional step. If step 1201 is not performed, step 1202 and step 1205 may not be performed, either. In this case, this step may include step 1203 and step 1204.

Step 1203: Obtain, from the first content list based on the graph tab in the first knowledge graph, content of a graph tab corresponding to at least one content tab, to obtain a second content list.

Step 1204: For each piece of content in the second content list, based on a weight of a graph tab corresponding to a content tab of the piece of content, calculate a weight of the piece of content; and based on a weight of each piece of content, sort the content in the second content list, and select a preset quantity of pieces of content from the second content list starting from a piece of content with a highest weight, to obtain the initial content list. The branch process ends.

In a possible implementation, the graph tabs in the first knowledge graph have different weights based on whether the graph tab is a first graph tab and a distance from the first graph tab. A weight of the first graph tab is highest, so that a shorter distance from the first graph tab indicates a relatively higher weight of the graph tab. The example of step 1001 is continued. In the total graph tab set (Resource/2019 novel coronavirus, Resource/2019 novel coronavirus infection pneumonia, Resource/SARS coronavirus, class/coronavirus, class/drug, Resource/glucocorticoid), weights of the first graph tabs "Resource/2019 novel coronavirus" and "Resource/glucocorticoid" are highest, followed by a weight of a graph tab whose distance from the first graph tab is 1. It should be noted that, if the preset value in step 1001 is 2, the total graph tab set further includes a graph tab whose distance from the first graph tab is 2. In this case, a weight of a graph tab whose distance from the first graph tab is 2 is less than the weight of the graph tab whose distance from the first graph tab is 1.

In another possible implementation, the graph tabs in the first knowledge graph may have a same weight.

In a possible implementation, in this step, when a weight of a piece of content is calculated based on weights of graph tabs corresponding to a content tab of the piece of content, the weights of the graph tabs corresponding to the content tab of the piece of content may be directly added up, to obtain the weight of the piece of content. For example, it is assumed that the graph tabs in the first knowledge graph have different weights based on whether the graph tab is a first graph tab and a distance from the first graph tab. The first graph tab is a graph tab 1 and a weight of the first graph tab is 10. A weight of a graph tab 2 whose distance from the graph tab 1 is 1 is 6, and a weight of a graph tab 3 whose distance from the graph tab 1 is 2 is 3. If a content tab of a piece of content corresponds to the graph tab 1 and the graph tab 3, a weight of the piece of content is 10+3=13. If a content tab of a piece of content corresponds to the graph tabs 1 to 4, a weight of the piece of content is 10+6+3=19. It is assumed that the graph tabs in the first knowledge graph have a same weight. It is assumed that the graph tabs 1 to 3 are still included, and a weight of each graph tab is 2. If a content tab of a piece of content corresponds to one graph tab, a weight of the piece of content is 2. If the content tab corresponds to two graph tabs, the weight of the piece of the content is 4.

It should be noted that the preset quantity may be a preset value, or may be a value obtained through real-time calculation based on a preset percentage and a quantity of content pieces in the second content list. If the preset quantity is a preset value, and the quantity of content pieces in the second content list is less than the preset quantity, step 1204 may be omitted.

Step 1205: Obtain, from the content library based on the graph tab in the first knowledge graph, the content of the graph tab corresponding to the at least one content tab, to obtain the second content list. Step 1204 is performed.

Step 1003: Obtain the knowledge profile of the user from the user profile of the user.

A preset knowledge-related tab may be obtained from the tab included in the user profile, to obtain the knowledge profile of the user

The execution sequence of step 1003 and steps 1001 and 1002 is not limited.

Step 1004: Filter the initial content list based on the knowledge profile of the user, to obtain the deep reading content list.

This step may include:

A parameter value of a first knowledge parameter of the user may be calculated based on the knowledge profile of the user. The first knowledge parameter may include but is not limited to a knowledge level, a cognitive ability, and topic familiarity.

A first topic depth value is calculated based on the parameter value of the first knowledge parameter of the user and a corresponding weight.

Content whose parameter value of a topic depth tab matches the first topic depth value is selected from the initial content list, to obtain the deep reading content list.

That content whose parameter value of a topic depth tab matches the first topic depth value is selected from the initial content list may include:

A topic depth value range is determined based on the first topic depth value.

Content whose parameter value of the topic depth tab is within the topic depth value range is found from the initial content list, to obtain the deep reading content list.

For the knowledge level, the cognitive ability, and the topic familiarity, a first value may be calculated based on a parameter value of a preset profile tab in the knowledge profile and a weight corresponding to the parameter value, and a level is determined based on a relationship between the first value and the level. Optionally, weights corresponding to parameter values of preset profile tabs may be added up, to obtain the first value. The knowledge level, the cognitive ability, and the topic familiarity can be separately calculated based on different profile tabs.

For example, the knowledge level can be calculated based on an academic degree and a job; the cognitive ability can be calculated based on an academic degree, a job, and an age; and the topic familiarity can be calculated based on an academic degree, a job, a log reading record, and a history reading record. Different values of different profile tabs may have different weights.

A knowledge profile of a user 1 may include: Gender: male; Job: doctor; Education: master's degree; Age: 35; Log reading: science and technology news, and knowledge Q&A; and History reading: novel coronavirus, My People, My Country, and Chinese Super League. Assuming that the education (master's degree) of the user 1 corresponds to a weight a1, and the job (doctor) corresponds to a weight a2, a first value a1+a2 may be obtained through calculation. If the knowledge level is divided into three levels: A, B, and C, a value range corresponding to A is greater than or equal to b1, a value range corresponding to B is (b2, b1), and a value range corresponding to C is (0, b2], where b2 is less than b1. Assuming that a1+a2 is within the value range corresponding to A, a knowledge level of the user 1 is A. The cognitive ability and the topic familiarity are calculated in the same way. Details are not described herein. It is assumed that the knowledge level of the user 1 is A, a cognitive ability is A, and topic familiarity is A can be obtained.

A knowledge profile of a user 2 may include: Gender: male; Job: retirement; Age: 70; Log reading: entertainment news, and travel news; and History reading: Beijing travel information. It is assumed that a knowledge level of the user 2 is B, a cognitive ability is C, and topic familiarity is C can be obtained based on the same calculation manner as the user 1.

In the foregoing example, parameter values of the profile tabs, such as the education, the job, and the age, based on which the knowledge level and the cognitive ability are obtained are relatively fixed and do not change frequently. Therefore, the knowledge level and the cognitive ability of the user may be calculated in real time when this step is performed, or may be calculated in advance, and is saved in the knowledge profile of the user as a part of the knowledge profile of the user.

A possible implementation of calculating the first topic depth value is: determining a weight corresponding to a parameter value of each first knowledge parameter, and adding up the weight corresponding to the parameter value of each first knowledge parameter to obtain the first topic depth value.

A possible implementation of determining the topic depth value range based on the first topic depth value is: presetting several topic depth value ranges based on a value range of the topic depth value, and determining, from the preset topic depth value ranges, a topic depth value range to which the first topic depth value belongs.

The user 1 and the user 2 are still used as an example. Assuming that a higher parameter value level of the first knowledge parameter indicates a higher weight, a first topic depth value of the user 1 is greater than a first topic depth value of the user 2. Correspondingly, a deep reading content list obtained through filtering for the user 1 may include high-quality professional content, such as content from Centers for Disease Control (CDC, Centers for Disease Control) and an authoritative international medical journal, and an article signed by a relevant medical expert, which can expand a knowledge system of the user 1 and improve user experience. A deep reading content list obtained through filtering for the user 2 may include popular science content and related prevention knowledge, which supplements a knowledge system to the user and improve user experience.

Step 1005: Map the content in the deep reading content list to different entries of the display style based on the deep reading display style, to generate deep reading information.

The display style may include at least two entries, and different entries correspond to different style tabs of content. One entry may correspond to one or more style tabs. Correspondingly, the content in the deep reading content list may be mapped to a corresponding entry of the display style based on a correspondence between the style tab of the content and the entry

Optionally, different display styles may be set based on the classification tab of the content, and in this step, a corresponding display style may be found based on a classification tab of the content currently browsed by the user. For example, different display styles may be set based on the first level of classification information in the classification tab of the content. For example, the first level of classification information includes: entertainment, military, news, sports, finance, and science and technology. In this case, different display styles may be set for the entertainment, the military, the news, the sports, the finance, and the science and technology. An entry included in each display style may be the same or different. In addition, a plurality of display styles may alternatively be set for a same classification tab. In this step, several corresponding display styles may be found based on the classification tab of the content currently browsed by the user, a display style selected by the user through a selection operation is obtained, and the content in the deep reading content list is mapped to different entries of the display style based on the display style selected by the user, to generate the deep reading information.

After the content is mapped to the entry, the content may be processed based on an entry requirement, for example, performing statistics and sorting, to obtain information required by the entry.

For example, it is assumed that the display style includes the following entries: {encyclopedia definition}, {data statistics}, {latest progress, which is displayed in chronological order of important nodes}, {deep content list}, and {related reading content list}.

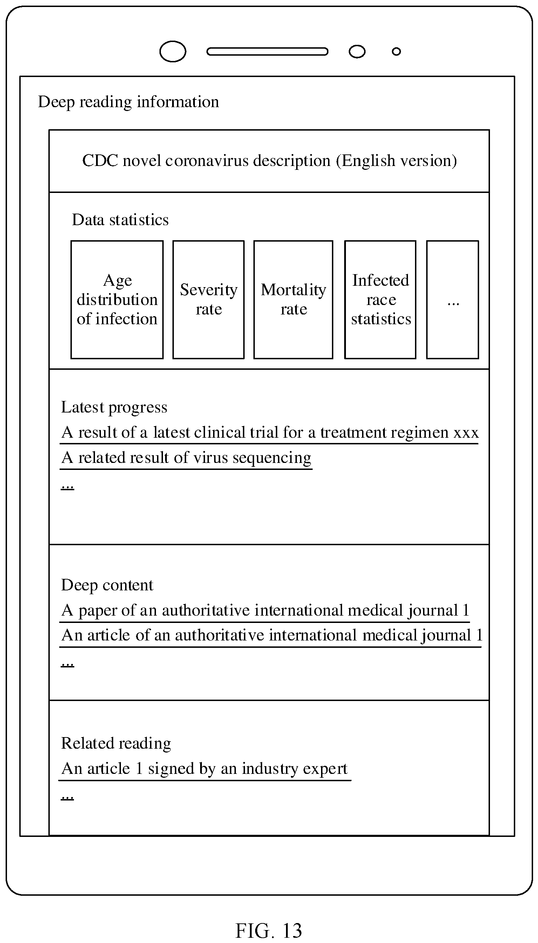

In this case, as shown in FIG. 13, deep reading information generated by the server for the user 1 based on the deep reading content list of the user 1 may include:
{CDC novel coronavirus description (English version)} ---encyclopedia definition;
{Age distribution of infection, severity rate, mortality rate, and race-related statistics} ---data statistics;
{A result of a latest clinical trial for a relevant treatment regimen, for example, "A result of a latest clinical trial for a treatment regimen xxx", "A related result of virus sequencing" shown in FIG. 13}---latest progress;
{A professional paper of an authoritative international medical journal 1, and an article of an authoritative international medical journal 2} ---deep content; and
{An article signed by an industry expert} ---related reading.

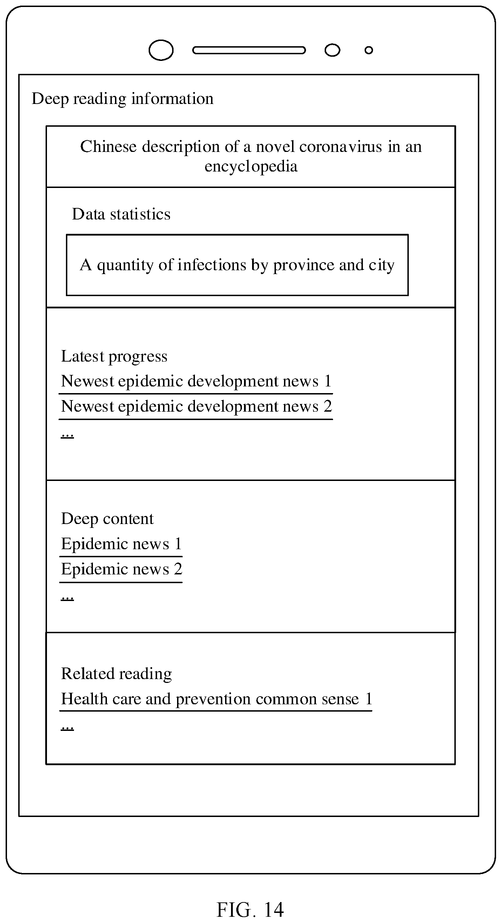

As shown in FIG. 14, deep reading information generated by the server for the user 1 based on the deep reading content list of the user 1 may include:
{Chinese description of a novel coronavirus in an encyclopedia}---encyclopedia definition;
{A quantity of infections by province and city} ---data statistics;
{Newest epidemic development} ---latest progress, which is displayed in chronological order of important nodes;
{Selected epidemic news}---deep content; and
A health care common sense}---related reading.

It should be noted that FIG. 13 and FIG. 14 are merely examples, and are not intended to limit a specific style of the display style in this embodiment of this application.

According to the content recommendation method in this embodiment of this application, the deep reading content list is obtained based on the deep reading keyword list, and the content in the deep reading content list is mapped to an entry of a preset deep reading display style, to generate deep reading information, so that content recommended to the user is more systematic, and the user can find content of interest more easily. Therefore, this can reduce an invalid browsing operation of the user, improve reading efficiency of the user, and improve user experience.

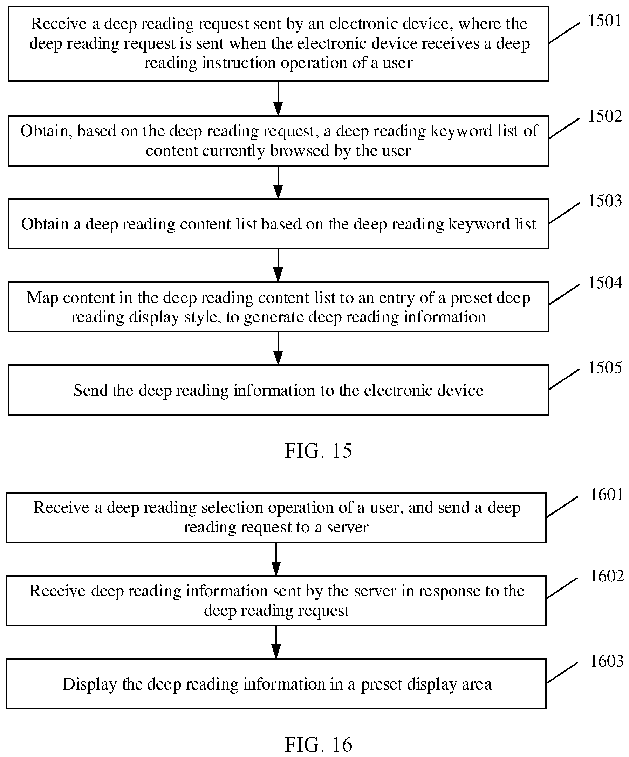

FIG. 15 is a flowchart of another embodiment of a content recommendation method according to this application. The method may be applied to a server. As shown in FIG. 15, the method may include:

Step 1501: Receive a deep reading request sent by an electronic device, where the deep reading request is sent when the electronic device receives a deep reading instruction operation of a user.

Step 1502: Obtain, based on the deep reading request, a deep reading keyword list of content currently browsed by the user.

Step 1503: Obtain a deep reading content list based on the deep reading keyword list.

Step 1504: Map content in the deep reading content list to an entry of a preset deep reading display style, to generate deep reading information.

Step 1505: Send the deep reading information to the electronic device.

Optionally, the obtaining a deep reading content list based on the deep reading keyword list may include:
obtaining a first knowledge graph from a preset original knowledge graph based on the deep reading keyword list;
obtaining an initial content list from a content library based on the first knowledge graph; and
obtaining a knowledge profile of the user, and filtering the initial content list based on the knowledge profile, to obtain the deep reading content list.

Optionally, the obtaining a first knowledge graph of the content currently browsed by the user from a preset original knowledge graph based on the deep reading keyword list may include:
finding, from the original knowledge graph based on the deep reading keyword list, a graph tab corresponding to a deep reading keyword in the list; and
extracting the first knowledge graph from the original knowledge graph based on the found graph tab, where the first knowledge graph is a partial knowledge graph that is in the original knowledge graph and that includes the found graph tab.

Optionally, the obtaining an initial content list from a content library based on the first knowledge graph may include:
obtaining, from the content library based on classification information included in the first knowledge graph, content under the classification information, to obtain a first content list;
obtaining, from the first content list based on the graph tab included in the first knowledge graph, content whose content tab hits at least one graph tab, to obtain a second content list; and
determining the initial content list based on the second content list.

Optionally, the filtering the initial content list based on the knowledge profile, to obtain the deep reading content list may include:
obtaining a parameter value of a first knowledge parameter of the user based on the knowledge profile;
calculating a first topic depth value based on the parameter value of the first knowledge parameter of the user; and
selecting, from the initial content list, content whose topic depth value matches the first topic depth value, to obtain the deep reading content list.

Optionally, before the mapping content in the deep reading content list to an entry of a preset deep reading display style, the method may further include:
obtaining a parameter value of first classification information of the content currently browsed by the user, and obtaining a deep reading display style corresponding to the parameter value of the first classification information.

Optionally, the deep reading request carries a content identifier of the content currently browsed by the user; and the obtaining, based on the deep reading request, a deep reading keyword list of content currently browsed by the user may include:
searching for the deep reading keyword list from the content library based on the content identifier, where the found deep reading keyword list is a deep reading keyword list of content indicated by the content identifier

Optionally, the deep reading request carries the deep reading keyword list of the content currently browsed by the user; and the obtaining, based on the deep reading request, a deep reading keyword list of content currently browsed by the user may include:
obtaining, from the deep reading request, the deep reading keyword list of the content currently browsed by the user.

FIG. 16 is a flowchart of still another embodiment of a content recommendation method according to this application. The method may be applied to an electronic device. As shown in FIG. 16, the method may include:

Step 1601: Receive a deep reading selection operation of a user, and send a deep reading request to a server, where the deep reading request includes a content identifier or a deep reading keyword list that is of content currently browsed by the user, and the content currently browsed by the user is content displayed by the electronic device to the user when the deep reading selection operation of the user is received.

Step 1602: Receive deep reading information sent by the server in response to the deep reading request, where the deep reading information is obtained by the server by obtaining a deep reading content list based on the content identifier or the deep reading keyword list and mapping content in the deep reading content list to an entry of a deep reading display style.

Step 1603: Display the deep reading information in a preset display area.

Optionally, the receiving a deep reading selection operation of a user may include:
receiving a selection operation performed by the user on a content details page for a deep reading button; or
receiving a selection operation performed by the user on a content details page for a deep reading tab.

It may be understood that some or all of the steps or operations in the foregoing embodiments are merely examples. In embodiments of this application, other operations or variations of various operations may be further performed. In addition, the steps may be performed in a sequence different from that presented in the foregoing embodiments, and not all operations in the foregoing embodiments may need to be performed.

The content recommendation method provided in embodiments of this application may provide a new reading experience mode for a user, overcome a disadvantage of fragmented reading in the conventional technology, and meet a requirement of people for obtaining comprehensive knowledge and expanding knowledge systems. For each user and a piece of content read by each user, deep reading information may be triggered to be generated. The deep reading information includes panoramic knowledge about the content that the user wants to know, to avoid complex operation experience caused by self-searching and self-filtering by the user, and improve user experience. In embodiments of this application, generation of the deep reading information does not depend on manual editing, and is automatically generated by the server. Timeliness is the same as that of latest news content. The generated deep reading information is screened based on a knowledge profile of the user, such as a knowledge level and a cognitive ability. Therefore, on a basis of ensuring that the user can recognize the content, the user can obtain new knowledge from the deep reading information based on an original knowledge system, and expand a knowledge range of the user, so that the user is attracted to read and user experience is improved. When a deep reading content list is obtained from a content library, history high-quality content in the content library can be re-exposed, to prevent the high-quality content from sinking to the bottom due to timeliness and improve efficiency of using the high-quality content.

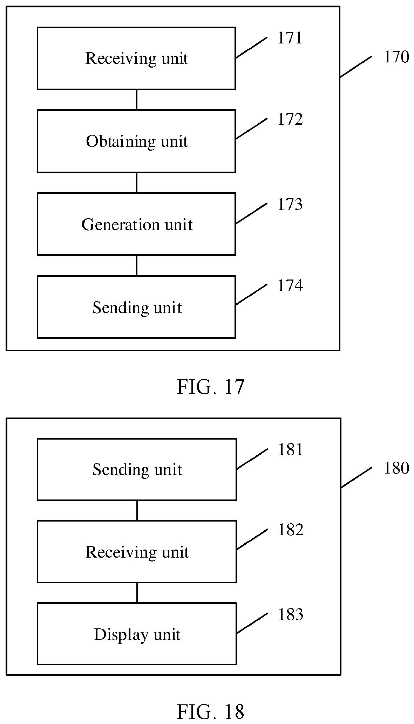

FIG. 17 is a diagram of a structure of an embodiment of a content recommendation apparatus according to this application. The apparatus may be applied to a server. As shown in FIG. 17, the apparatus 170 may include:
a receiving unit 171, configured to receive a deep reading request sent by an electronic device, where the deep reading request is sent when the electronic device receives a deep reading instruction operation of a user;
an obtaining unit 172, configured to: obtain, based on the deep reading request, a deep reading keyword list of content currently browsed by the user; and obtain a deep reading content list based on the deep reading keyword list;
a generation unit 173, configured to map content in the deep reading content list to an entry of a preset deep reading display style, to generate deep reading information; and
a sending unit 174, configured to send the deep reading information to the electronic device.

Optionally, the obtaining unit may be specifically configured to:
obtain a first knowledge graph from a preset original knowledge graph based on the deep reading keyword list;
obtain an initial content list from a content library based on the first knowledge graph; and
obtain a knowledge profile of the user, and filter the initial content list based on the knowledge profile, to obtain the deep reading content list.

Optionally, the obtaining unit may be specifically configured to:
find, from the original knowledge graph based on the deep reading keyword list, a graph tab corresponding to a deep reading keyword in the list; and
extract the first knowledge graph from the original knowledge graph based on the found graph tab, where the first knowledge graph is a partial knowledge graph that is in the original knowledge graph and that includes the found graph tab.

Optionally, the obtaining unit may be specifically configured to:
obtain, from the content library based on classification information included in the first knowledge graph, content under the classification information, to obtain a first content list;
obtain, from the first content list based on the graph tab included in the first knowledge graph, content whose content tab hits at least one graph tab, to obtain a second content list; and
determine the initial content list based on the second content list.

Optionally, the obtaining unit may be specifically configured to:
obtain a parameter value of a first knowledge parameter of the user based on the knowledge profile;
calculate a first topic depth value based on the parameter value of the first knowledge parameter of the user; and
select, from the initial content list, content whose topic depth value matches the first topic depth value, to obtain the deep reading content list.

Optionally, the obtaining unit may be further configured to:
obtain a parameter value of first classification information of the content currently browsed by the user, and obtain a deep reading display style corresponding to the parameter value of the first classification information.

Optionally, the obtaining unit may be specifically configured to:
search for the deep reading keyword list from the content library based on a content identifier, where the found deep reading keyword list is a deep reading keyword list of content indicated by the content identifier

Optionally, the obtaining unit may be specifically configured to:
obtain, from the deep reading request, the deep reading keyword list of the content currently browsed by the user.

FIG. 18 is a diagram of a structure of an embodiment of a content recommendation apparatus according to this application. The apparatus may be applied to an electronic device. As shown in FIG. 18, the apparatus 180 may include:
a sending unit 181, configured to: receive a deep reading selection operation of a user, and send a deep reading request to a server, where the deep reading request includes a content identifier or a deep reading keyword list that is of content currently browsed by the user, and the content currently browsed by the user is content displayed by the electronic device to the user when the deep reading selection operation of the user is received;
a receiving unit 182, configured to receive deep reading information sent by the server in response to the deep reading request, where the deep reading information is obtained by the server obtaining a deep reading content list based on the content identifier or the deep reading keyword list and mapping content in the deep reading content list to an entry of a deep reading display style; and
a display unit 183, configured to display the deep reading information in a preset display area.

Optionally, the sending unit may be specifically configured to: receive a selection operation performed by the user on a content details page for a deep reading button; or receive a selection operation performed by the user on a content details page for a deep reading tab.

The apparatuses provided in the embodiments shown in FIG. 17 and FIG. 18 may be configured to perform the technical solutions in the method embodiments shown in FIG. 6 to FIG. 16 in this application. For an implementation principle and a technical effect of the apparatus, further refer to related descriptions in the method embodiments.

It should be understood that division of the units of the apparatuses in FIG. 17 and FIG. 18 is merely logical function division. During actual implementation, all or some of the units may be integrated into one physical entity, or may be physically separated. In addition, all the units may be implemented in a form of software invoked by using a processing element, or may be implemented in a form of hardware; or some units may be implemented in the form of software invoked by using the processing element, and some units are implemented in the form of hardware. For example, the obtaining unit may be a separately disposed processing element, or may be integrated into a chip of the electronic device for implementation. Implementation of another unit is similar thereto. In addition, all or some of the units may be integrated, or may be implemented independently. In an implementation process, steps of the foregoing method or the foregoing units may be implemented by using a hardware integrated logical circuit in a processor element, or by using instructions in a form of software.

An embodiment of this application further provides an electronic device, including a display, one or more processors, a memory, and one or more computer programs. The one or more computer programs are stored in the memory, the one or more computer programs include instructions, and when the instructions are executed by the device, the device is enabled to perform the method shown in FIG. 6 to FIG. 16.

An embodiment of this application further provides a server, including one or more processors, a memory, and one or more computer programs. The one or more computer programs are stored in the memory, the one or more computer programs include instructions, and when the instructions are executed by a device, the device is enabled to perform the method shown in FIG. 6 to FIG. 16.

An embodiment of this application further provides a computer-readable storage medium. The computer-readable storage medium stores a computer program, and when the computer program runs on a computer, the computer is enabled to perform the method provided in the embodiments shown in FIG. 6 to FIG. 16 in this application.

An embodiment of this application further provides a computer program product. The computer program product includes a computer program. When the computer program runs on a computer, the computer is enabled to perform the method provided in the embodiments shown in FIG. 6 to FIG. 16 in this application.

In embodiments of this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. At least one of the following items and a similar expression thereof refer to any combination of these items, including a single item or any combination of plural items. For example, at least one item of a, b, or c may indicate a, b, c, a and b, a and c, b and c, or a, b, and c, where a, b, and c may be singular or plural.

A person of ordinary skill in the art may be aware that, with reference to embodiments disclosed in this specification, described units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, when any of the functions is implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM for short), a random access memory (Random Access Memory, RAM for short), a magnetic disk, or a compact disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A content recommendation method, wherein the method is applied to a server, and comprises:
receiving a deep reading request sent by an electronic device, wherein the deep reading request is sent when the electronic device receives a deep reading instruction operation of a user;
obtaining, based on the deep reading request, a deep reading keyword list of content currently browsed by the user;
obtaining a deep reading content list based on the deep reading keyword list;
mapping content in the deep reading content list to an entry of a preset deep reading display style, to generate deep reading information; and
sending the deep reading information to the electronic device.

2. The method according to claim 1, wherein the obtaining a deep reading content list based on the deep reading keyword list comprises:
obtaining a first knowledge graph from a preset original knowledge graph based on the deep reading keyword list;
obtaining an initial content list from a content library based on the first knowledge graph; and
obtaining a knowledge profile of the user, and filtering the initial content list based on the knowledge profile, to obtain the deep reading content list.

3. The method according to claim 2, wherein the obtaining a first knowledge graph of the content currently browsed by the user from a preset original knowledge graph based on the deep reading keyword list comprises:
finding, from the original knowledge graph based on the deep reading keyword list, a graph tab corresponding to a deep reading keyword in the list; and
extracting the first knowledge graph from the original knowledge graph based on the found graph tab, wherein the first knowledge graph is a partial knowledge graph that is in the original knowledge graph and that comprises the found graph tab.

4. The method according to claim 2, wherein the obtaining an initial content list from a content library based on the first knowledge graph comprises:
obtaining, from the content library based on classification information comprised in the first knowledge graph, content under the classification information, to obtain a first content list;
obtaining, from the first content list based on the graph tab comprised in the first knowledge graph, content whose content tab hits at least one graph tab, to obtain a second content list; and
determining the initial content list based on the second content list.

5. The method according to claim 2, wherein the filtering the initial content list based on the knowledge profile, to obtain a deep reading content list comprises:
obtaining a parameter value of a first knowledge parameter of the user based on the knowledge profile;
calculating a first topic depth value based on the parameter value of the first knowledge parameter of the user; and
selecting, from the initial content list, content whose topic depth value matches the first topic depth value, to obtain the deep reading content list.

6. The method according to any one of claims 1 to 5, wherein before the mapping content in the deep reading content list to an entry of a preset deep reading display style, the method further comprises:
obtaining a parameter value of first classification information of the content currently browsed by the user, and obtaining a deep reading display style corresponding to the parameter value of the first classification information.

7. The method according to any one of claims 1 to 6, wherein the deep reading request carries a content identifier of the content currently browsed by the user; and the obtaining, based on the deep reading request, a deep reading keyword list of content currently browsed by the user comprises:
searching for the deep reading keyword list from the content library based on the content identifier, wherein the found deep reading keyword list is a deep reading keyword list of content indicated by the content identifier.

8. The method according to any one of claims 1 to 7, wherein the deep reading request carries the deep reading keyword list of the content currently browsed by the user; and the obtaining, based on the deep reading request, a deep reading keyword list of content currently browsed by the user comprises:
obtaining, from the deep reading request, the deep reading keyword list of the content currently browsed by the user

9. A content recommendation method, wherein the method is applied to an electronic device, and comprises:
receiving a deep reading selection operation of a user, and sending a deep reading request to a server, wherein the deep reading request comprises a content identifier or a deep reading keyword list that is of content currently browsed by the user, and the content currently browsed by the user is content displayed by the electronic device to the user when the deep reading selection operation of the user is received;
receiving deep reading information sent by the server in response to the deep reading request, wherein the deep reading information is obtained by the server by obtaining a deep reading content list based on the content identifier or the deep reading keyword list and mapping content in the deep reading content list to an entry of a deep reading display style; and
displaying the deep reading information in a preset display area.

10. The method according to claim 9, wherein the receiving a deep reading selection operation of a user comprises:
receiving a selection operation performed by the user on a content details page for a deep reading button; or
receiving a selection operation performed by the user on a content details page for a deep reading tab.

11. A server, comprising:
one or more processors, a memory, and one or more computer programs, wherein the one or more computer programs are stored in the memory, the one or more computer programs comprise instructions, and when the instructions are executed by a device, the device is enabled to perform the method according to any one of claims 1 to 8.

12. An electronic device, comprising:
a display, one or more processors, a memory, and one or more computer programs, wherein the one or more computer programs are stored in the memory, the one or more computer programs comprise instructions, and when the instructions are executed by a device, the device is enabled to perform the method according to either of claims 9 and 10.

13. A computer-readable storage medium, wherein the computer-readable storage medium stores a computer program, and when the computer program runs on a computer, the computer is enabled to perform the method according to any one of claims 1 to 8.

14. A computer-readable storage medium, wherein the computer-readable storage medium stores a computer program, and when the computer program runs on a computer, the computer is enabled to perform the method according to either of claims 9 and 10.
